# EUROPEAN PATENT SPECIFICATION

(11) **EP 0 443 210 B1**
(45) Date of publication and mention of the grant of the patent: **05.07.1995**
(21) Application number: 90200390.4
(22) Date of filing: 20.02.1990
(51) Int. Cl.: A62C 3/07, B60K 11/00, F01P 11/12

(54) **Fire protected agricultural machine**
Feuerschutzeinrichtung für eine landwirtschaftliche Maschine
Machine agricole avec protection incendie

(43) Date of publication of application: 28.08.1991
(73) Proprietor: NEW HOLLAND BELGIUM N.V., B-8210 Zedelgem (BE)
(72) Inventor: Witdoek, Daniel C., B-8830 Hooglede (BE); Vergote, Geert, R.J., B-8700 Izegem (BE)
(74) Representative: Vandenbroucke, Alberic

(56) References cited:
- EP-A- 0 269 765
- EP-A- 0 313 763
- FR-A- 2 025 173
- GB-A- 1 325 688

## Description

The present invention generally is directed to a power driven agricultural machine which is used in surroundings which are contaminated with inflammable debris. More specifically, the present invention is particularly useful on combine harvesters which, by their nature, very often are used in an atmosphere which is loaded with inflammable debris such as chaff, straw particles, dust etc. Indeed, combine harvesting preferably is done when the crop to be harvested is both ripe and very dry.

Present day combine harvesters use powerful internal combustion engines which may have horsepower ratings of up to 300 hp. and, as is generally known, such engines generate a lot of heat up to the extent that any inflammable debris, which falls onto hot engine parts or even comes near such parts, is scorched or parched and even may catch fire. This represents a serious fire hazard in that such scorched debris may fall onto the stubble or crop standing on the field with the accompanying risk that this crop field may catch fire. Alternatively such scorched debris also may drop onto inflammable dirt accumulated on certain parts of the machine. This may light fire first to this accumulated dirt and subsequently to the machine itself. In the worst case, such a machine fire also may spread to the crop field.

It often has been experienced that, in use of a combine harvester, chaff, straw particles and other debris indeed tends to accumulate at certain spots on the machine and this is particularly hazardous when these spots are situated in the vicinity of the engine for reasons already explained herebefore. This risky situation may exist on combine harvesters having an engine service platform which is surrounded by shieldings in as much as this forms an open top, boxlike structure in which inflammable debris may accumulate in great quantities.

In GB-A-1.325.688, there is disclosed an engine enclosure which surrounds the engine and the radiator. A fan at the side of the engine enclosure draws in cooling air between vanes at the front and the top of the engine enclosure, along the engine itself and through a radiator, containing the engine coolant. Filter means are provided behind the vanes and an air stream is generated between the vanes and the filter means, in order to remove debris therefrom. This embodiment does not deal in an adequate way with the fire hazard problem, as the fan creates a partial vacuum inside the engine enclosure and still draws in smaller particles of chaff and dust. Inside the enclosure there is an uneven, turbulent air flow, which permits the deposit of inflammable material on the rear portion of the engine body and in the corner between the engine platform and the rear panel of the enclosure, so that inside the engine enclosure, all conditions are present for lighting a fire. Moreover, the efficiency of the radiator is reduced because the cooling air has been heated by the engine, before it is drawn through the radiator core. The used cooling air, which leaves the engine enclosure, is blown away from the engine and steering platform and is not directed to any portion of the combine in order to create a forceful blast therealong.

FR-A-2.025.173 discloses another enclosure which comprises an engine compartment and a separate radiator compartment. The engine compartment is provided with a fan for drawing in air through a static screen and generating an air flow along the engine. Air outlet openings are provided at the front and at the bottom of the engine compartment. The front openings are directed to the straw elevator in order to prevent the deposit of debris thereon. Because of the large surface of the bottom opening, most of the air passes therethrough and only a slight overpressure is generated inside the engine compartment. Just a minor portion of the air flows along the front portion of the engine and through the front openings. Because of the height of these openings, the air flow along the straw elevator is quickly dissipated, so that the cleaning effect is felt over only a short distance. The radiator compartment is provided with a separate fan, which draws in cooling air through a static screen. No means are provided for the removal of the chaff and dust which has entered into the radiator compartment and has been deposited onto the bottom thereof. The used coolant air, which leaves the radiator compartment, is blown away from the engine and steering platform and is not directed to any portion of the combine in order to create a forceful blast therealong.

It therefore is the objective of the present invention to provide a less complicated and more effective configuration for obviating or, at least, reducing to the greatest possible extent the fire hazards accompanying power driven machines operating in an environment which is contaminated with inflammable debris such as chaff, straw particles etc.

The approach made by the present invention involves the use of used cooling air from the radiator for preventing, to the maximum possible extent, that, on the one hand, inflammable debris can come anywhere near hot engine parts, and, on the other hand, inflammable debris can accumulate on machine parts in the vicinity of the engine.

According to the present invention, a power driven agricultural machine is provided for use in surroundings contaminated with inflammable debris (e.g. chaff, straw particles, dust, etc.) and comprising :
- an internal combustion engine for providing motive power to the machine and/or energizing machine parts thereof;
- an engine cooling apparatus including a radiator and a fan; said fan being operable to urge cooling air through the radiator for cooling engine coolant therein; and
- additional air blast means for directing an air blast across at least one other machine part in the proximity of the engine;
   said machine being characterized in that :
- said additional air blast means comprise channel means disposed to capture part of the used cooling air, which has passed through the radiator, and to direct this part of the cooling air towards and across said at least one other machine part, for keeping this machine part free of any accumulation of inflammable debris.

This invention advantageously is applicable on combine harvesters which have an engine service platform upon which inflammable debris tends to accumulate if no precautionary measures are taken.

In the preferred embodiment, the radiator is provided at the pressure side of the fan and the engine is disposed at the side of the radiator facing away from the fan; the arrangement being such that the fan draws cooling air in from the surrounding atmosphere and urges this air past the fan, through the radiator and subsequently along and past the engine encased in a funnel shaped structure sealingly coupled, at one end, to the radiator and having, at the opposite end, an outlet opening which is positioned in the vicinity of the engine power take off.

In this arrangement, the channel means have an inlet section disposed between the radiator and the engine and said inlet section has an inlet opening positioned immediately adjacent a section of the radiator for capturing said part of the cooling air. The channel means further also comprise an outlet section connected to the inlet section; said outlet section having an outlet slit extending across at least substantial portion of the width of the service platform and being oriented to, in use, direct an air curtain across said service platform.

A combine harvester in accordance with the present invention will now be described in greater detail, by way of example, with reference to the accompanying drawings, in which :
Figure 1 is a diagrammatic side elevation of the combine harvester, and
Figure 2 shows, to a larger scale, a partial and schematic top view of the combine harvester illustrated in Figure 1.

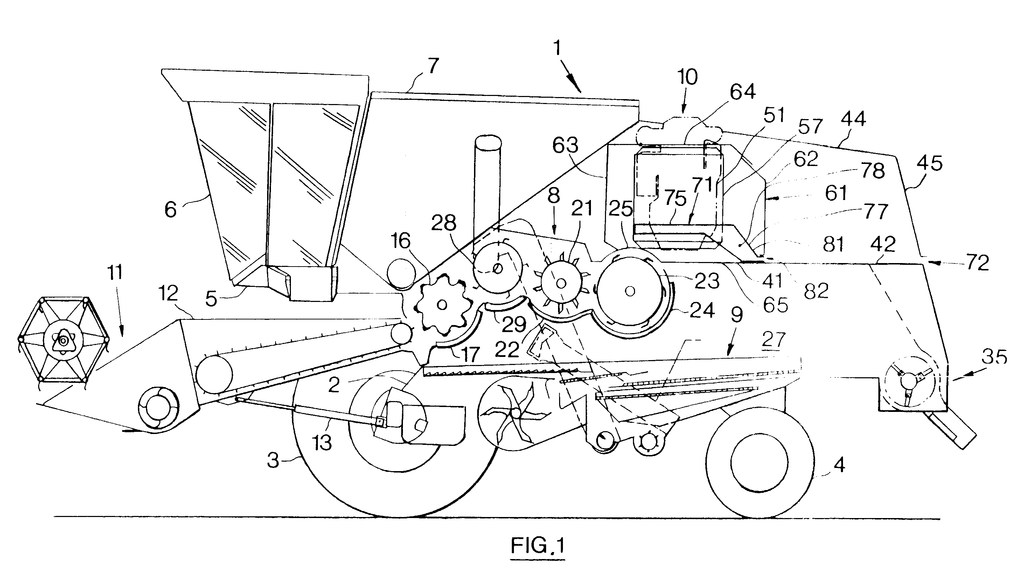

With reference to the drawings, particularly Figure 1, the combine harvester, generally indicated at 1, comprises a main chassis or frame 2 supported on a front pair of drive wheels 3 and a rear pair of steerable wheels 4. Supported on the main chassis 2 are an operator's platform 5, with operator's cab 6, a grain tank 7, a threshing and separating mechanism 8 and a power plant 10. A conventional header 11 and straw elevator 12 extend forwardly of the main chassis 2 and the header 11 is pivotally secured to the chassis 2 for generally vertical movement which is controlled by extensible hydraulic cylinders 13.

As the combine harvester 1 is propelled forwardly over a field with standing crop, the latter is severed from the stubble by a sickle bar on the header 11, whereafter the header 11 and straw elevator 12 supply the cut crop to the threshing and separating mechanism 8. The crop received therein is threshed and separated, that is to say, the crop is rubbed and beaten, whereby the grain, seed or the like, is loosened and separated from the straw, coils or other discardable part of the crop.

The combine harvester illustrated in Figure 1 comprises a conventional threshing mechanism including a conventional threshing cylinder 16 cooperable with a conventional threshing concave 17. The separator portion of the threshing and separating mechanism 8 comprises a first separator rotor or cylinder 21 cooperable with a first separator concave 22 and a second rotor 23 cooperable with a second separator concave 24. The second separator rotor 23 is mounted within a separator housing 25, in part formed by said second separator concave 24 and both of these components 23, 25 have a width substantially exceeding the width of the first cylinder 21 which has the same width as the threshing cylinder 16. Preferably, the rotor housing 25 and the separator rotor 23 therein have a width approximately twice that of the threshing cylinder 16.

A conventional straw beater 28 and cooperable beater grate 29 are provided at the transition between the threshing and separating parts of the threshing and separating mechanism 8.

In use, the mat of crop material received by the separator rotor 23 is divided into two (by means not shown) and the resulting two portions are moved spirally around the rotor 23 to respective ends thereof to complete the separating action. On reaching the ends of the rotor 23, the mats of remaining crop material (i.e. mainly straw as the grain is separated therefrom) are propelled by the rotor 23 through respective straw hoods 27 (only one shown in Figure 1) for discharge from the machine.

The components of the combine harvester so far described are disclosed in greater detail in GB-A-2.063.033 to which reference is made.

The discardable crop material issuing from the separating mechanism (mainly straw) is discharged from the machine in one of two ways. In one mode of operation, the straw is discharged in a central windrow by virtue of the two independent streams of straw first being deflected inwardly of the machine by pivotable deflectors (not shown). In an alternative mode of operation, these deflectors are placed in an inoperative position allowing the straw issuing from the ends of the rotor 23 to flow to respective straw choppers 35 (only one being shown in Figure 1). The straw choppers 35 are rotary devices adapted to chop the straw and to propel chopped straw through respective discharge outlets which are inclined downwardly and flare outwardly and are effective to spread the chopped straw across the full width of the machine and beyond. Details of these straw choppers are disclosed in EP-A-0.117.591 to which reference is made.

It will be appreciated that the discharging of the straw in any one of the two ways described generates a lot of dust and fine crop parts which become airborne and which contaminate the environment in which the combine has to operate. This may be particularly critical in case the harvester is set to chop the straw mats.

Turning now to the cleaning operation, grain which has been separated from the straw falls onto the grain cleaning mechanism 9 which comprises means to separate chaff and other impurities from the grain, and means to separate unthreshed parts, known as tailings. Cleaned grain is then elevated into the grain tank 7 and the tailings are reprocessed in separate tailings rethreshers (not shown) and returned to the cleaning mechanism 9 for repeated cleaning action.

Chaff and other impurities thus separated from the grain in the cleaning mechanism 9 are made airborne and discharged from the machine at the rear thereof. It again will be appreciated that this equally is an important source of contamination of the environment in which the combine harvester has to operate.

Another major source of contamination is the header 11, the operation of which also causes lots of dust, chaff and other impurities to become airborne around the harvester.

This contamination of the harvester environment with dust, chaff, fine straw particles and other impurities creates a fire hazard when these impurities come into the vicinity of the engine 51 of the combine harvester 1. This is particularly true because combine harvesting preferably is done only when the crop to be harvested is both ripe and very dry and the problem created by this fire hazard is critical in as much as not only the machine may be put on fire thereby which, of course, is not at all acceptable but also the crop field in which the machine is operating, may catch fire in case chaff and straw particles, which caught fire because of contact with hot surfaces of the engine, fall onto the stubble and/or the crop standing on the field.

It is the objective of the present invention to obviate or at least reduce to the greatest possible extent, this fire hazard.

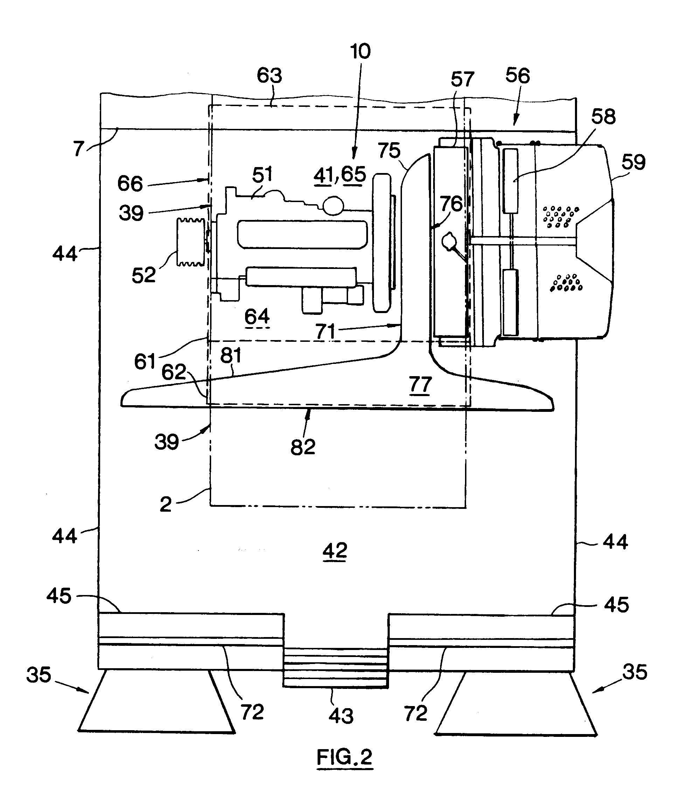

Considering the power plant 10 of the combine harvester as illustrated in Figures 1 and 2, it is installed generally at the top of the rear half of this combine harvester i.e. on top of the top wall 41 of the harvester main body 2, generally rearwardly of the grain tank 7 and generally above the discharge area of the separator rotor 23. The main body top wall 41 extends rearwardly of the position of the power plant 10 and forms a service platform 42 to which access can be gained via a ladder 43 provided centrally at the rear end of the harvester and which schematically is shown in Figure 2 only.

As is conventional, this service platform 42 is surrounded by generally upright shielding walls 44, 45 which extend generally fore-and-aft at the outer transverse sides of the machine, respectively generally transversely at the opposite sides of the ladder 43 and at the rear of the platform 42. This platform 42 together with these surrounding side walls 44, 45 thus form an open top boxlike structure at the forward end of which the power plant 10 is provided.

As is conventional, the power plant 10 comprises an internal combustion engine 51 which is positioned generally transversely and has its output shaft with the main cluster of drive pulleys 52 thereon disposed beyond one side edge of the harvester main body 2 but still within the side shieldings 44. Depending on the size of the combine harvester, the engine 51 may have a power rating in the range of 100 to 300 hp. and it will be appreciated that, during operation, such a power source generates a lot of heat.

The power plant 10 further also comprises a cooling apparatus 56 which preferably, though not always, is arranged in line with the engine 51 at the side thereof opposite to the side where the output shaft with the drive pulleys 52 is provided. This cooling apparatus 56 mainly consist of three parts i.e. a radiator 57, a cooling fan 58 and a rotary air filter or screen 59.

The radiator 57 is disposed adjacent the engine 51 and the rotary air screen 59 is provided at the side of the radiator 57 facing away from the engine 51. The cooling fan 58 is installed generally between the rotary air screen 59 and the radiator 57 and is arranged to draw cooling air from the surrounding atmosphere through the rotary air screen 59 and urge this cooling air through the radiator 57 for cooling engine coolant therein. Used cooling air further also is urged to flow past the engine 51 for further cooling the latter and keeping the vicinity thereof clear of any debris such as chaff, dust, straw particles etc which otherwise may catch fire when exposed to the engine heat.

Further details of the cooling apparatus 56 are disclosed in GB-A-1.387.690 and GB-A-1.580.452 to which reference is made.

While the purpose of the rotary air screen 59 is to filter the cooling air prior to passing through the radiator 57 and in the vicinity of the engine 51, it will be appreciated that small airborne inflammable particles nevertheless get through the rotary air screen 59 and the radiator 57 into the vicinity of the engine 51 although experience has indicated that this presents only a minor risk.

However, the amount of inflammable particles that are airborne and reach the engine compartment from the surroundings without passing through the rotary air screen 59 and the radiator 57 is much more important. It should be appreciated in this respect that the forceful flow of the cooling air through the radiator 57 and around the engine 51 creates additional air flows which draw said inflammable particles from the surrounding atmosphere into the immediate vicinity of the engine 51. When exposed to the engine heat or when blown onto hot engine parts, these particles get scorched or parched and, if these particles ultimately drop onto the crop standing on the field and/or onto the stubble, this may start a fire. A fire also may be started when these scorched particles drop onto accumulated dirt on the machine.

It has been experienced that, a.o. because of the boxlike structure surrounding the engine compartment and the service platform 42, the powerful flow of cooling air through the radiator 57 and around the engine 51 causes uncontrolled air flows and turbulences within this boxlike structure in a manner so that airborne debris is drawn from the surrounding atmosphere into said boxlike structure and deposited at certain locations on the service platform 42 where it is accumulated to form large volumes of inflammable material.

This, of course, is a dangerous situation in as much as occasionally particles parched or scorched by the engine heat in the manner as described above also may arrive in these accumulated piles of inflammable material with the resultant risk of first these piles and subsequently the machine catching fire.

According to the invention, these risks are greatly reduced if not fully obviated by two measures which generate the best results when applied in combination but which nevertheless also advantageously can be applied individually. These measures aim, on the one hand, at preventing, to the extent possible, that inflammable particles can reach or come anywhere near hot engine parts and, on the other hand, at preventing the accumulation of inflammable dirt in the vicinity of the engine in general and on the engine service platform 42 in particular.

To accomplish the first objective, the engine 51 is encased in a funnel shaped structure 61 mainly consisting of a rear wall 62, a front wall 63, a top wall 64 and a portion of the main frame top wall 41 forming the bottom wall 65 of this structure. All of these walls extend from the radiator 57, to which they sealingly are connected, to an outlet 66 in the vicinity of the power take off pulleys 52. The walls 62, 63 and 64 are shown in full lines in Figure 1 and in dashed lines in Figure 2.

It will be appreciated that, during operation, the cooling air issuing from the radiator 57 forcefully flows around the engine 51 towards the outlet 66 of the funnel shaped structure 61 in the vicinity of the power take off pulleys 52 and it also will be appreciated that this greatly reduces the risks for the engine area to become contaminated with inflammable particles which are present in the surrounding atmosphere. Moreover, by funnelling the cooling air closely around and along the engine 51, improved engine cooling additionally is obtained.

Still a further important aspect of the present invention is the fact that the engine compartment is effectively shielded from the service platform 42. Yet, to make engine servicing possible, at least the top wall 64, but preferably also the rear wall 62, have been made hingeable so as to permit access to the engine 51 by pivoting these walls.

It also will be appreciated that the engine 51 cannot be encased in a completely sealed boxlike structure i.e. that the structure encasing the engine 51 must have an air inlet (via the radiator 57) and an air outlet 66 as indeed, otherwise cooling air could not be caused to flow past and along the engine for both additionally cooling the engine 51 and keeping the engine compartment free of any accumulated dirt. This air outlet 66 is provided generally in the vicinity of the power take off pulleys 52, i.e. at a location between a side wall 39 of the combine main body 2 and the adjacent generally vertical combine shielding wall 44. At this location the used cooling air can escape into the surrounding atmosphere in an upward direction as well as in forward and rearward directions within the combine side shielding 44.

Having explained that the funnel shaped structure 61 preferably comprises a.o. a purposebuilt front wall 63, it also will be appreciated that this wall 63 may be left out, whereby the rear wall of the grain tank 7 will take the place of this wall 63 to form, together with the other walls 62, 64 and 65 said funnel shaped structure 61. In this case, the gap between the radiator 57 and the grain tank rear wall, of course, carefully should be sealed off.

Turning now to the other aspect of the invention, means 71 have been provided for additionally directing an air blast across at least one other machine part in the proximity of the engine 51 to prevent accumulation of inflammable material thereon. This at least one other machine part preferably is the engine service platform 42 and the additional air blast means 71 are operable to create a forceful air curtain closely above the surface of the service platform 42 so as to avoid any light and inflammable dirt to settle thereon.

To avoid that any machine parts installed on the service platform 42 (e.g. a battery, a hydraulic pump, bearing supports for drive components etc) would obstruct to any substantial degree the flow of the air curtain over substantial sections of its width, these parts have been placed on supports disposed at a minimal level above the surface of the service platform 42 with these supports being supported on the service platform 42 by mounting brackets of reduced dimensions in the direction across the flow direction of the air curtain. This permits the air curtain to pass basically unhindered underneath these machine parts. Additionally and quite importantly the shieldings 44, 45 surrounding the service platform 42 have been provided with discharge slits 72 at the level of the air curtain and in the direction transverse to the flow direction of this curtain. In the preferred embodiment, these slits 72 are provided only in the rear shielding walls 45 as the additional air blast means 71 are disposed to cause the air curtain to flow in a rearward direction away from the engine compartment.

The additional air blast means 71 may comprise purposebuilt fan means together with appropriate air ducts although preferably these air blast means 71 make use of a fraction of the used cooling air flow generated by the cooling fan 58 and after it issues from the radiator 57. In this preferred embodiment, the additional air blast means 71 mainly consist of channel means with an inlet section 75 and an outlet section 81. The inlet section 75 is generally rectangularly shaped in top view and extends across the full width of the radiator 57 at a location between this radiator 57 and the engine 51. The height of this inlet section 75 is only a fraction of the height of the radiator 57; this height, in the preferred embodiment, being in the range of 100-150 mm. The side of the inlet section 75 facing the radiator is left open to define an inlet opening 76 and this inlet opening 76 is positioned in the immediate proximity of the radiator cooling elements so as, in use, to capture a fraction of the cooling air blast as already said and to funnel it towards the outlet section 81. At this location the meshes of the radiator structure are substantially wider than in the other parts of the radiator 57 to obviate the need for pressurized cleaning of this section of the radiator 57 as is usual for conventional radiator structures. This in turn obviates the need for making the inlet section 75 of the additional air blast means 71 readily detachable.

The outlet section 81 to which the inlet section 75 is connected, has an outlet opening 82 which is disposed to spread an air curtain across substantially the entire engine service platform 42 in a rearward direction away from the engine compartment. The outlet opening 82 preferably has a rather reduced height and a quite large width extending substantially across the full width of the service platform 42. In the preferred embodiment, the height of the outlet slit 82 is in the range of 10-20 mm only. Said outlet slit 82 faces generally rearwardly in a horizontal plane and is positioned at a minimal height above, respectively on top of the service platform 42. This outlet slit 82 further advantageously may be provided at the lower edge of the rear wall 62 of the funnel shaped structure 61 so that the channel means 71 extend fully within said funnel shaped structure 61.

The total surface of the outlet slit 82 is several times smaller than the total surface of the inlet opening 76 which is advantageous for obtaining an air curtain which is more or less equally strong across the full width of the outlet slit 82. In the preferred embodiment the inlet opening 76 is at least twice as large as the outlet slit 82 and preferably this ratio is in the range of 1:4.

Another feature which enhances the even spreading of the air flow pattern across the width of the service platform 42 consists of the staggering in height of the inlet and outlet openings 76, 82. In the preferred embodiment the outlet slit 82 is positioned substantially below the level of the inlet opening 76 whereby, when in use, the air flow transfers from the inlet section 75 to the outlet section 81, this air flow abuts against a downwardly inclined wall 77 whereby the flow pattern both is deflected downwardly and spread transversely outwardly along this wall 77. This spreading action is further increased by providing a comparatively large "expansion" space 78 at the transition between the inlet and outlet sections 75, 81 wherein kinetic energy of the air flow is converted into pressure.

As will be understood from what precedes, the preferred additional air blast means 71 capture a fraction of the used cooling air blast after it issues from the radiator 57 and deflect this fraction towards the engine service platform 42 for creating a rearwardly oriented air curtain which spans substantially the full width of this service platform 42 and which flows in a rearward direction whereby any inflammable dirt particles such as chaff, pieces of straw etc, which otherwise would tend to settle down on the service platform 42, are blown away and discharged through the discharge slits 72 between the service platform 42 and the shieldings 45.

Considering Figure 2, it will be noticed that the inlet section 75 of the additional air blast means 71 is positioned at a level above the lower end of the radiator 57 thus leaving this lower end free for an air flow to issue therefrom and pass underneath the engine and through the funnel shaped structure 61. This is advantageous for keeping the area below the engine 51 free of any foreign particles.

While the preferred structure, in which the principles of the present invention have been incorporated, is described above and is shown in the accompanying drawings, it is to be understood that the invention is not to be limited to the particular details as described above and shown in said drawings, but that, in fact, widely different means may be employed in the practice of the broader aspects of the invention.

As an example, it is very well conceivable that the cooling apparatus 56 is placed out of line with the engine 51. Indeed, this apparatus 56 including the radiator 57, the fan 58 and the rotary air screen 59 may be mounted on the engine service platform 42 at a location rearwardly and to one side of the engine 51. In this case, the radiator 57 may be placed at an angle relative to the axis of the engine 51 so as still to direct the cooling air flow issuing from the radiator 57 towards and around the engine 51. It also will be appreciated that even with this relative positioning of the engine 51 and the cooling apparatus 56, the engine 51 still may be provided within a funnel shaped structure leading from the radiator to which it sealingly is connected to a location beyond the remote end of the engine 51.

This alternative arrangement with a displaced cooling apparatus 56 also may use additional air blast means 71 which may be in the form of one or even more than one channel means which extend from inlet openings proximate to the radiator 57 at the air exit side thereof to elongated and narrow outlet openings or slits disposed to spread one or more air curtains across the service platform 42 for clearing any inflammable material therefrom.

## Claims

1. A power driven agricultural machine (1) for use in surroundings contaminated with inflammable debris (e.g. chaff, straw particles, dust, etc.) and comprising :
- an internal combustion engine (51) for providing motive power to the machine (1) and/or energizing machine parts thereof;
- an engine cooling apparatus (56) including a radiator (57) and a fan (58); said fan (58) being operable to urge cooling air through the radiator (57) for cooling engine coolant therein; and
- additional air blast means (71) for directing an air blast across at least one other machine part (42) in the proximity of the engine (51);
characterized in that :
- said additional air blast means comprise channel means (71) disposed to capture part of the used cooling air, which has passed through the radiator (57), and to direct this part of the cooling air towards and across said at least one other machine part (42), for keeping this machine part (42) free of any accumulation of inflammable debris.

2. An agricultural machine (1) according to claim 1, characterized in that :
- said agricultural machine is a combine harvester (1);
- said engine cooling apparatus (56) is disposed relative to the engine (51) so that used cooling air, which has been urged through said radiator (57), additionally is urged past this engine (51) for further cooling the latter and for keeping the vicinity of this engine (51) clear of inflammable debris; and
- said at least one other machine part (42) is an engine service platform (42).

3. An agricultural machine (1) according to claim 2, characterized in that :
- the radiator (57) is provided at the pressure side of the fan (58);
- the engine (51) is disposed at the side of the radiator (57) facing away from the fan (58); the arrangement being such that the fan (58) draws cooling air in from the surrounding atmosphere and urges this air past the fan (58), through the radiator (57) and subsequently along and past the engine (51); and
- the channel means (71) have an inlet section (75) disposed between the radiator (57) and the engine (51); said inlet section (75) having an inlet opening (76) positioned immediately adjacent a section of the radiator (57) for capturing said part of the cooling air.

4. An agricultural machine (1) according to claim 3, characterized in that the inlet section (75) of the channel means (71) is disposed at a level above the lower end of the radiator (57) in a manner leaving a lower portion of the radiator (57) exposed for cooling air flowing therethrough to pass therefrom towards and alongside the underside of the engine (51).

5. An agricultural machine (1) according to claim 3 or 4, characterized in that the channel means (71) also comprise an outlet section (81) connected to the inlet section (75), said outlet section (81) having an outlet slit (82), extending across at least a substantial portion of the service platform (42) and being oriented to, in use, direct an air curtain across said service platform (42).

6. An agricultural machine (1) according to claim 5, characterized in that the surface of the inlet opening (76) of the channel means (71) is larger than the surface of the outlet slit (82) of said channel means (71).

7. An agricultural machine (1) according to claim 6, characterized in that the surface of the inlet opening (76) of the channel means (71) is at least twice as large as the surface of the outlet slit (82) of said channel means (71).

8. An agricultural machine (1) according to any of the claims 5 to 7, characterized in that :
- the inlet opening (76) and the outlet slit (82) are staggered in height; and
- the channel means (71) comprise an abutment surface (77) between said inlet opening (76) and said outlet slit (82) for the air flow to abut thereagainst and spread out thereacross while moving from said inlet opening (76) to said outlet slit (82).

9. An agricultural machine (1) according to any of the claims 5 to 8, characterized in that the channel means (71) comprise an intermediate expansion space (78) between the inlet opening (76) and the outlet slit (82).

10. An agricultural machine (1) according to any of the claims 5 to 9, characterized in that at least one further machine part is installed on the service platform (42) above the level of the air curtain which, in use, flows across said service platform (42); said part being supported in said position by support means which, as seen transversely across the flow direction of the air curtain, have reduced dimensions.

11. An agricultural machine (1) according to any of the claims 5 to 10, characterized in that :
- shielding walls (44, 45) extend above the level of the service platform (42); and
- a discharge slit (72) is provided between at least one of said shielding walls (45) and said platform (42) and generally in the path of the air curtain which, in use, flows across this service platform (42).

12. An agricultural machine (1) according to any of the claims 3 to 11, characterized in that the cooling apparatus (56) further also comprises a rotary air filter (59) provided at the suction side of the fan (58); the arrangement being such that, in use, the fan (58) draws cooling air in from the surrounding atmosphere through said rotary air filter (59).

13. An agricultural machine (1) according to any of the preceding claims, characterized in that the engine (51) is encased in a funnel shaped structure (61) which, at one end is sealingly connected to the radiator (57) and which has an outlet opening (66) at its opposite end; said opening (66) being positioned generally in the vicinity of the engine power take off means (52).

14. An agricultural machine (1) according to claim 13 when appended to any of the claims 5 to 12 , characterized in that the outlet slit (82) of the channel means (71) is provided generally at the circumference of said funnel shaped structure (61); the arrangement being such that said channel means (71) extend fully within said funnel shaped structure (61).

15. An agricultural machine (1) according to claim 13 or 14, characterized in that the funnel shaped structure (61) has at least one hingeable wall portion.

## Patentansprüche

1. Kraftgetriebene landwirtschaftliche Maschine (1) zur Verwendung in einer Umgebung, die mit entzündbarem Abfallmaterial (beispielsweise Spreu, Strohteilchen, Staub und so weiter) verunreinigt ist, wobei die Maschine folgende Teile aufweist:
- eine Brennkraftmotor (51) zur Lieferung von Fahrantriebsleistung an die Maschine (1) und/oder zum Antrieb von Maschinenteilen hiervon,
- eine Motorkühlvorrichtung (56), die einen Kühler (57) und ein Gebläse (58) einschließt, wobei das Gebläse betreibbar ist, um Kühlluft durch den Kühler (57) zum Kühlen des Motorkühlmittels in diesem zu drücken, und
- zusätzliche Luftströmungs-Blaseinrichtungen (71) zum Lenken eines Luftstromes über zumindestens einen weiteren Maschinenteil (42) in der Nähe des Motors (51),
dadurch gekennzeichnet, daß
- die zusätzlichen Luftstrom-Blaseinrichtungen Kanalteile (71) umfassen, die so angeordnet sind, daß sie einen Teil der verbrauchten Kühlluft auffangen, die den Kühler (57) durchlaufen hat, und diesen Teil der Kühlluft in Richtung auf und über den genannten zumindestens einen anderen Maschinenteil (42) lenken, um diesen Maschinenteil (42) frei von jeder Ansammlung von entzündbarem Abfallmaterial zu halten.

2. Landwirtschaftliche Maschine nach Anspruch 1,
dadurch ekennzeichnet, daß:
- die landwirtschaftliche Maschine ein Mähdrescher (1) ist,
- die Motorkühlvorrichtung (56) bezüglich des Motors (51) so angeordnet ist, daß verbrauchte Kühlluft, die durch den Kühler (57) gedrückt wurde, zusätzlich entlang dieses Motors (51) bewegt wird, um diesen weiter zu kühlen und um die nähere Umgebung dieses Motors (51) von entzündbarem Abfallmaterial frei zu halten, und
- der zumindestens ein weitere Maschinenteil (42) eine Motor-Wartungsplattform (42) ist.

3. Landwirtschaftliche Maschine (1) nach Anspruch 2,
dadurch gekennzeichnet, daß
- der Kühler (57) auf der Druckseite des Gebläses (58) angeordnet ist,
- der Motor (51) auf der von dem Gebläse (58) fort gerichteten Seite des Kühlers (57) angeordnet ist, wobei die Anordnung derart ist, daß das Gebläse (58) Kühlluft von der umgebenden Atmosphäre ansaugt und diese Luft an dem Gebläse (58) vorbei durch den Kühler (57) und nachfolgend entlang des Motors (51) und an diesem vorbei drückt, und
- die Kanalteile (71) einen Einlaßabschnitt (75) aufweisen, der zwischen dem Kühler (57) und dem Motor (51) angeordnet ist, wobei der Einlaßabschnitt (75) eine Einlaßöffnung (76) aufweist, die unmittelbar benachbart zu einem Abschnitt des Kühlers (57) angeordnet ist, um diesem Teil der Kühlluft aufzufangen.

4. Landwirtschaftliche Maschine (1) nach Anspruch 3,
dadurch gekennzeichnet, daß der Einlaßabschnitt (75) der Kanalteile (71) in einer Höhenlage oberhalb des oberen Endes des Kühlers (57) in einer derartigen Weise angeordnet ist, daß ein unterer Abschnitt des Kühlers (57) frei bleibt, damit eine durch diesen Abschnitt strömende Kühlluft von diesem Abschnitt aus in Richtung auf und entlang der Unterseite des Motors (51) strömen kann.

5. Landwirtschaftliche Maschine (1) nach Anspruch 3 oder 4,
dadurch gekennzeichnet, daß die Kanalteile (71) weiterhin einen Auslaßabschnitt (81) aufweisen, der mit dem Einlaßabschnitt (75) verbunden ist, und daß der Auslaßabschnitt (81) einen Auslaßschlitz (82) aufweist, der sich über zumindestens einen erheblichen Teil der Wartungsplattform (42) erstreckt und derart ausgerichtet ist, daß er im Betrieb einen Luftvorhang über die Wartungsplattform (42) lenkt.

6. Landwirtschaftliche Maschine (1) nach Anspruch 5,
dadurch gekennzeichnet, daß die Oberfläche der Einlaßöffnung (76) der Kanalteile (71) größer als die Oberfläche des Auslaßschlitzes (82) der Kanalteile (71) ist.

7. Landwirtschaftliche Maschine (1) nach Anpruch 6,
dadurch gekennzeichnet, daß die Oberfläche der Einlaßöffnung (76) der Kanalteile (71) zumindestens doppelt so groß ist, wie die Oberfläche des Auslaßschlitzes (82) der Kanalteile (71).

8. Landwirtschaftliche Maschine (1) nach einem der Ansprüche 5 bis 7, dadurch gekennzeichnet, daß:
- die Einlaßöffnung (76) und der Auslaßschlitz (82) in ihrer Höhe abgestuft sind, und
- die Kanalteile (51) eine Aufpralloberfläche (77) zwischen der Einlaßöffnung (76) und dem Auslaßschlitz (82) für die Luftströmung umfassen, die gegen diese Aufpralloberfläche strömt und sich entlang dieser aufspreizt, während sie sich von der Einlaßöffnung (76) zum Auslaßschlitz (82) bewegt.

9. Landwirtschaftliche Maschine (1) nach einem der Ansprüche 5 bis 8, dadurch gekennzeichnet, daß die Kanalteile (71) einen zwischenliegenden Ausdehnungsraum (78) zwischen der Einlaßöffnung (76) und dem Auslaßschlitz (82) aufweisen.

10. Landwirtschaftliche Maschine (1) nach einem der Ansprüche 5 bis 9, dadurch gekennzeichnet, daß zumindestens ein weiterer Maschinenteil auf der Wartungsplattform (42) oberhalb der Höhenlage des Luftvorhanges installiert ist, der im Betrieb über die Wartungsplattform (42) strömt, wobei dieser Teil an seinem Platz durch Stützeinrichtungen gehaltert ist, die bei Betrachtung in Querrichtung über die Strömungsrichtung des Luftvorhanges verringerte Abmessungen aufweisen.

11. Landwirtschaftliche Maschine (1) nach einem der Ansprüche 5 bis 10, dadurch gekennzeichnet, daß:
- Begrenzungswände (44, 45) sich oberhalb der Höhenlage der Wartungsplattform (42) erstrecken, und
- ein Auslaßschlitz (72) zwischen zumindestens einer der Begrenzungswände (45) und der Plattform (42) und allgemein in der Bahn des Luftvorhanges vorgesehen ist, der im Betrieb über diese Wartungsplattform (42) strömt.

12. Landwirtschaftliche Maschine (1) nach einem der Ansprüche 3 bis 11, dadurch gekennzeichnet, daß die Kühlvorrichtung (56) weiterhin einen rotierenden Luftfilter (59) umfaßt, der an der Saugseite des Gebläses (58) angeordnet ist, wobei die Anordnung derart ist, daß im Betrieb das Gebläse (58) Kühlluft von der umgebenden Atmosphäre durch den rotierenden Luftfilter (59) ansaugt.

13. Landwirtschaftliche Maschine (1) nach einem der vorhergehenden Ansprüche,
dadurch gekennzeichnet, daß der Motor (51) in einer trichter- oder kanalförmigen Struktur (61) angeordnet ist, die an einem Ende unter Abdichtung mit dem Kühler (57) verbunden ist und die eine Auslaßöffnung (66) an ihrem gegenüberliegenden Ende aufweist, wobei die Öffnung (66) allgemein in der Nähe der Motor-Leistungsabgabeeinrichtungen (52) angeordnet ist.

14. Landwirtschaftliche Maschine (1) nach Anspruch 13 unter Rückbeziehung auf einen der Ansprüche 5 bis 12,
dadurch gekennzeichnet, daß der Auslaßschlitz (82) der Kanalteile (71) allgemein am Umfang der trichter- oder kanalförmigen Struktur (61) vorgesehen ist, wobei die Anordnung derart ist, daß sich die Kanalteile (51) vollständig innerhalb der trichter- oder kanalförmigen Struktur (61) erstrecken.

15. Landwirtschaftliche Maschine (1) nach Anspruch 13 oder 14,
dadurch gekennzeichnet, daß die trichter- oder kanalförmige Struktur (61) zumindestens einen gelenkig befestigten Wandabschnitt aufweist.

## Revendications

1. Machine agricole à moteur (1) destinée à être utilisée dans des environnements contaminés par des débris inflammables (p.ex. balle, particules de paille, poussières etc.) et comprenant :
- un moteur à combustion interne (51) pour fournir la puissance motrice à la machine (1) et/ou actionner les éléments mécaniques de cette dernière ;
- un dispositif de refroidissement du moteur (56) comprenant un radiateur (57) et un ventilateur (58) ; le dit ventilateur (58) pouvant être utilisé pour faire passer l'air de refroidissement à travers le radiateur (57) de manière à refroidir le réfrigérant du moteur qui s'y trouve ; et
- des moyens de soufflage d'air supplémentaires (71) pour diriger un souffle d'air sur au moins une autre partie de la machine (42), à proximité du moteur (51) ;
caractérisée en ce que :
- les dits moyens de soufflage d'air supplémentaires comprennent des conduits (71) disposés de manière à recueillir une partie de l'air de refroidissement utilisé qui a traversé le radiateur (57) et à diriger cette partie de l'air de refroidissement vers et sur au moins une autre partie de la dite machine (42) de manière à préserver cette partie de la machine (42) de toute accumulation de débris inflammables.

2. Machine agricole (1) selon la revendication 1,
caractérisée en ce que :
- la dite machine agricole est une moissonneuse-batteuse (1);
- le dit dispositif de refroidissement du moteur (56) est disposé relativement au moteur (51) de façon à ce que l'air de refroidissement utilisé, qui a été poussé à travers le dit radiateur (57) est, en outre, poussé au-delà du dit moteur (51) pour un refroidissement supplémentaire de ce dernier et pour garder le voisinage du dit moteur (51) exempt de débris inflammables ; et
- au moins une autre partie de la dite machine (42) est une plate-forme de service du moteur (42).

3. Machine agricole (1) selon la revendication 2,
caractérisée en ce que :
- le radiateur (57) est prévu du côté de refoulement du ventilateur (58) ;
- le moteur (51) est disposé du côté du radiateur (57) opposé au ventilateur (58) ; la disposition étant telle que le ventilateur (58) aspire l'air de refroidissement de l'atmosphère environnante et pousse cet air au-delà du ventilateur (58), à travers le radiateur (57) et ensuite, le long et au-delà du moteur (51) ; et
- les conduits (71) ont une section d'admission (75) disposée entre le radiateur (57) et le moteur (51) ; la dite section d'admission (75) possédant une ouverture d'admission (76) positionnée de manière immédiatement adjacente à une section du radiateur (57) pour recueillir la dite partie de l'air de refroidissement.

4. Machine agricole (1) selon la revendication 3,
caractérisée en ce que la section d'admission (75) des conduits (71) est disposé à un niveau supérieur à l'extrémité inférieure du radiateur (57) de manière à laisser une partie inférieure du radiateur (57) exposée pour que l'air de refroidissement qui la traverse passe ensuite en direction et le long de la face inférieure du moteur (51).

5. Machine agricole (1) selon la revendication 3 ou 4, caractérisée en ce que les conduits (71) comprennent également une section de sortie (81) reliée à la section d'admission (75), la dite section d'admission (81) possédant une fente de sortie (82), s'étendant sur au moins une partie substantielle de la plate-forme de service (42) et étant orientée de manière à diriger, en cours d'utilisation, un rideau d'air sur la dite plate-forme de service (42).

6. Machine agricole (1) selon la revendication 5,
caractérisée en ce que la surface de l'ouverture d'admission (76) des conduits (71) est plus grande que la surface de la fente de sortie (82) des dits conduits (71).

7. Machine agricole (1) selon la revendication 6,
caractérisée en ce que la surface de l'ouverture d'admission (76) des conduits (71) est au moins deux fois plus grande que la surface de la fente de sortie (82) des dits conduits (71).

8. Machine agricole (1) selon l'une quelconque des revendications 5 à 7, caractérisée en ce que :
- l'ouverture d'admission (76) et la fente de sortie (82) sont étalées en hauteur ; et
- les conduits (71) comprennent une surface de butée (77) entre la dite ouverture d'admission (76) et la dite fente de sortie (82) pour que l'écoulement d'air bute contre et soit distribué par les dites ouvertures en passant de la dite ouverture d'admission (76) vers la dite ouverture de sortie (82).

9. Machine agricole (1) selon l'une quelconque des revendications 5 à 8, caractérisée en ce que les conduits (71) comprennent un espace d'expansion intermédiaire (78) entre l'ouverture d'admission (76) et la fente de sortie (82).

10. Machine agricole (1) selon l'une quelconque des revendications 5 à 9, caractérisée en ce que au moins une autre partie de la machine est installée sur la plate-forme de service (42) au-dessus du niveau du rideau d'air qui, en cours d'utilisation, s'écoule sur la dite plate-forme de service (42) ; la dite partie étant supportée dans la dite position par des supports qui, considérés transversalement par rapport à la direction d'écoulement du rideau d'air, ont des dimensions réduites.

11. Machine agricole (1) selon l'une quelconque des revendications 5 à 10, caractérisée en ce que :
- des parois de protection (44, 45) s'étendent au-dessus du niveau de la plate-forme de service (42) ; et
- une fente d'évacuation (72) est prévue entre au moins l'une des dites parois de protection (45) et la dite plate-forme (42), généralement sur le trajet du rideau d'air qui, en cours d'utilisation, s'écoule sur la dite plate-forme de service (42).

12. Machine agricole (1) selon l'une quelconque des revendications 3 à 11, caractérisée en ce que le dispositif de refroidissement (56) comprend en outre un filtre à air rotatif (59) prévu du côté aspiration du ventilateur (58) ; la disposition étant telle, qu'en cours d'utilisation, le ventilateur (58) aspire l'air de refroidissement à partir de l'atmosphère environnante par le dit filtre à air rotatif (59).

13. Machine agricole (1) selon l'une quelconque des revendications qui précèdent, caractérisée en ce que le moteur (51) est encastré dans une structure en entonnoir (61) qui, à une extrémité, est reliée à étanchéité au radiateur (57) et qui possède une ouverture de sortie (66) à son extrémité opposée ; la dite ouverture (66) étant généralement positionnée au voisinage de la prise de force du moteur (52).

14. Machine agricole (1) selon la revendication 13 lorsqu'elle est jointe à l'une quelconque des revendications 5 à 12, caractérisée en ce que la fente de sortie (82) des conduits (71) est généralement prévue à la circonférence de la dite structure en entonnoir (61) ; la disposition étant telle que les dits conduits (71) occupent la totalité de la structure en entonnoir (61).

15. Machine agricole (1) selon la revendication 13 ou 14, caractérisée en ce que la structure en entonnoir (61) possède au moins une partie de paroi pivotable.
